# EUROPEAN PATENT APPLICATION

(11) **EP 4 549 773 A1**
(43) Date of publication of application: **07.05.2025**
(21) Application number: 23207534.1
(22) Date of filing: 02.11.2023
(51) Int. Cl.: F16F 7/01, F16C 35/077, F03D 13/20, F03D 80/70, F16H 57/00, F16H 57/023, F16H 57/02, F16H 57/028

(54) **DAMPER FOR USE IN A WIND TURBINE**

(71) Applicant: Siemens Gamesa Renewable Energy A/S, 7330 Brande (DK)
(72) Inventor: The designation of the inventor has not yet been filed
(74) Representative: SGRE-Association

(57) **Abstract**

The invention describes a damper (1) mounted about a component (22, 23, 24, 25), which damper (1) comprises an enclosing structure (11) shaped to fit about the component (22, 23, 24, 25); an interior cavity (10) defined by the enclosing structure (11) and a surface (231S, 225, 25S) of the component (22, 23, 24, 25); and a quantity of energy-absorbing material (15) in the interior cavity (10) of the damper (1), which energy-absorbing material (15) comprises a particulate matter, preferably a particulate matter with irregular particle shapes. The invention further describes a method of assembling such a damper, and a wind turbine comprising a number of such dampers.

## Description

### Background

The noise emitted by a wind turbine can travel some distance, and can be a deciding factor in obtaining permission to install a wind turbine at a specific location and/or in determining when the power output of an operational wind turbine must be curtailed in order to comply with noise regulations.

Certain frequencies travel further than others, for example tonal noise originating primarily from a drivetrain that includes a gearbox. The meshing gears of a planetary gearbox can contribute significantly to tonal noise. To reduce this type of noise, which can be perceived as particularly annoying, much design effort may be invested at the design stage to avoid interactions of exciting frequencies and natural frequencies of drivetrain components and structural elements of the wind turbine. For example, drivetrain components may be designed to optimize parameters such as inertia and stiffness, and to optimize the geometry of various gearbox components. However, design of a new drivetrain or re-design of an existing drivetrain is a long and costly procedure, requiring thorough validation during various stages of the design process and also in the field. With increasing size and power output, it is more difficult to optimize drivetrain components with regard to noise. In one approach to addressing this problem, various active and/or passive dampers have been proposed for incorporating in a wind turbine in order to dampen vibrations originating from the drivetrain. However, dampers that are effective are also expensive and can be difficult to integrate in the overall wind turbine design. For example, various known damping solutions involve expensive elastomer components and/or hydraulic components. Furthermore, such dampers generally require anchoring points, for example a drivetrain housing and a nacelle bedplate must be designed to include relatively large anchoring points. Such anchoring points are subject to fatigue loads and can therefore incur unfavourably high maintenance and/or replacement costs during the service life of the wind turbine.

It is therefore an object of the invention to provide a more economical and straightforward way of damping drivetrain vibrations.

This object is achieved by the claimed damper, by the claimed method of assembling a damper, and by the claimed wind turbine.

### Description

According to the invention, the damper in its assembled state is mounted about a vibrating component that exhibits vibration during operation.

The damper comprises an enclosing structure that is shaped to fit about the component, and an interior cavity with a shape or form defined by the enclosing structure and - directly or indirectly - by a surface of the component about which the damper is assembled. The enclosing structure can be made from any number of parts that are assembled about the component. The damper further comprises a quantity of energy-absorbing material in the interior cavity. The energy-absorbing material comprises a particulate matter, preferably a particulate matter with irregular particle shapes.

On account of its structure, the inventive damping assembly can be regarded as a type of "box" that is shaped to fit about or within a wind turbine component. The inventive damping assembly may therefore be referred to in the following as a "noise damping box" or simply "damping box".

As will be explained below, the interior cavity of the noise damping box can be defined entirely by the enclosing structure of the damper. For example, the enclosing structure can comprise four side walls that define the interior cavity. Equally, the interior cavity of the damper can be defined by the enclosing structure and also by a surface of the component. For example, the enclosing structure can comprise three side walls, and the fourth surface needed to define the interior cavity is a surface of the component. Either way, the shape of the component in the region about which the damping box is mounted determines - directly or indirectly - the shape of the interior cavity of the damper.

An advantage of the inventive damper is that it is a structurally simple device which is easy to construct and to install, and which makes it possible to alter or tune the mass of an already installed component at any stage during the service life of that component. The effect of the inventive damping box is to add mass to the vibrating component, thereby altering the inertia of the component. This in turn alters the vibration frequency of the component during operation of the machinery. Furthermore, the inventive noise damping box absorbs vibration energy of the component in an entirely passive manner, i.e. the inventive damper is a passive damper. The inventive damper is an effective means of mitigating noise, particularly tonal noise, emanating from a large vibrating component such as the gearbox of a wind turbine.

A further advantage of the inventive damping assembly is that the filler in the interior cavity can be adjusted at essentially any stage to "tune" the vibrational behaviour of the component, for example during a validation process carried out after the machinery is installed and made operational, or later on during the service life of the component.

The inventive damping box can also advantageously be used to retro-fit one or more components of an already installed and operational system such as a wind turbine. For example, a wind turbine drivetrain may already be equipped with one or more prior art dampers that fail to satisfactorily suppress vibrations during operation of the drivetrain, and a more effective suppression can be achieved by retro-fitting that drivetrain with one or more instances of the inventive damping box.

Since it can be constructed from a set of simple parts that can be assembled in a straightforward manner, the inventive damping box is low-maintenance and may even be maintenance-free over the service life of the component to which it is attached.

A further advantage of the inventive damping box is its scalability, i.e. the design of the damping box can easily be adjusted to components with different diameters and damping requirements. The structural parts of the damping box can be scaled up or scaled down to obtain an interior cavity with a capacity that suits the dimensions of a component, and the quantity and composition of the filler can be chosen according to the mass of the component.

According to the invention, assembly of the inventive damper comprises the steps of: assembling the enclosing structure about the component; and then putting a predetermined quantity of the energy absorbing material into the interior cavity of the assembled enclosing structure.

According to the invention, a wind turbine comprises a drivetrain installed in a nacelle mounted on a tower, and further comprises at least one instance of the inventive damper, for example a damping box assembled about a ring gear of a planetary gearbox of the drivetrain and/or a damping box assembled about a main bearing unit of the drivetrain; and/or a damping box assembled about the exterior of the tower; and/or a damping box assembled about the interior of the tower.

Particularly advantageous embodiments and features of the invention are given by the dependent claims, as revealed in the following description. Features of different claim categories may be combined as appropriate to give further embodiments not described herein.

In the following, without restricting the invention in any way, it may be assumed that the damping box is deployed to dampen vibrations of a wind turbine drivetrain component. Of course, the inventive damping box could be used to good effect in any kind of machinery that would benefit by damping using this kind of structure.

The purpose of the damper is to reduce structural vibration of the component about which it is assembled. In a preferred embodiment of the invention, the quantity and/or composition of the energy absorbing material is chosen on the basis of a desired reduction in amplitude of vibration of the component. In a preferred embodiment of the invention, the quantity of energy-absorbing material is chosen to change the resonant frequency of the component by a desired amount.

The energy-absorbing material or "filler" in the interior cavity of the damping box can be a single material or any material composition with suitable properties. The total quantity of material in the damping box is referred to herein as the "filling". In a particularly preferred embodiment of the invention, the energy-absorbing material comprises particulate matter, preferably particulate matter with irregular particle shapes. The filler can comprise a granular material such as sand, mineral aggregate, etc.

With one or more particulate materials as a filler in the damping box, kinetic energy from vibration of the component is transferred to the filler particles, which collide with each other. Each collision between two particles results in a transfer of kinetic energy between the particles, and conversion of a small amount of kinetic energy to sound energy and/or thermal energy. The inventive damping box therefore acts to passively dissipate kinetic energy of the vibrating component.

In a further preferred embodiment of the invention, the filler particles are irregular in shape and size. A filler with irregular particle shape and size will be favourably effective at promoting collisions between the particles. Having all particles roughly the same size will prevent smaller particles from collecting in lower levels of the filling, and will prevent larger particles from collecting at the top.

The damping properties of the damper can be adjusted as desired by adjusting the quantity and/or composition of the filler. For example, in order to increase the damping effect of the damper, the quantity of filler can be increased if possible. Alternatively, the previous filling can be replaced by a different filling, using filler material with a higher density and/or a greater hardness. Of course, a filling can comprise different kinds of filler material. Adjusting the type and/or quantity of filler can be done as required to alter the mass and/or resonant frequency of the assembled configuration (the damping box and component) by the desired amount.

The volume of the damper's interior cavity can also be adjusted as required, for example to accommodate a different quantity of filler. For example, an inflatable bag can be arranged in the interior space, and this can be inflated or deflated as appropriate to reduce or increase the available space in the interior of the damper.

The enclosing structure of the inventive damper can be made from any suitable material(s), for example extruded plastic parts, thermoformed plastic parts, metal parts, moulded composite parts, etc. To assemble the damper, these parts are joined in an appropriate manner. For example, metal parts can be joined by welding, whereas plastic or moulded composite parts can be joined using mechanical means (e.g. fasteners, form-fit or snap-fit joints) and/or adhesive bonds.

The inventive damping box could be assembled about the component during a manufacturing stage of that component, so that the component is installed with the damping box already in place. However, in a particularly preferred embodiment of the invention, the enclosing structure of the damping box comprises a plurality of parts that can be assembled about a previously installed component.

In a preferred embodiment, the enclosing structure comprises a plurality of parts that are assembled about the component. The parts are shaped to form an enclosing structure with a desired cross-sectional shape, for example an enclosing structure with an essentially rectangular cross-section. Of course, the cross-sectional shape of the enclosing structure can be oval, square, U-shaped, etc.

A vibrating component that requires damping often has an essentially cylindrical shape. Therefore, in a particularly preferred embodiment of the invention, the enclosing structure comprises a plurality of arcuate parts which can be assembled about a cylindrical component to form the enclosing structure. The adjacent arcuate parts may overlap to some extent. Equally, adjacent arcuate parts can be joined by a suitable mechanical connection, for example a form-fit or snap-fit connection, or by using clamps, fasteners, etc. Alternatively or in addition, adjacent arcuate parts can be joined by a weld bond or adhesive bond, depending on the material from which the parts are made.

In a further preferred embodiment, each arcuate part comprises outwardly directed flanges that lie against the surface of the component. The assembled enclosing structure can be secured to the component by attaching the flanges to the component using fasteners, or simply by arranging a lashing strap, a ring clamp, etc. about each flange and applying tension.

In an alternative embodiment, the damper comprises a pair of essentially identical or opposing side elements, each shaped to fit about the interior or exterior of the component, and an outer connecting element that extends between opposing outer edges of the side elements. Each element can be made from multiple parts that are joined in situ during the assembly process. Here also, the parts can be joined using fasteners, welded bonds, adhesive bonds, etc. The side elements may also be shaped to form outwardly directed flanges that are used to secure the damping box to the component as described above.

The dimensions of the damping box are determined by the component to which it will be mounted. For example, if the damping box is to be mounted about a ring gear of a planetary gearbox of a wind turbine drivetrain, a circular opening of the assembled enclosing structure will have a diameter that corresponds to the outer diameter of the ring gear (this can be in the order of several metres). The remaining dimensions of the enclosing structure are determined primarily by the desired volume of the interior cavity.

The vibrating component can be part of a larger machine such as a wind turbine drivetrain. Usually, a wind turbine drivetrain is located in a nacelle, and there is generally little room between the drivetrain and the nacelle. However, it can be necessary for maintenance personnel to pass between the drivetrain and the nacelle. Therefore, in a preferred embodiment of the invention, the enclosing structure is shaped according to access requirements of the machine of which the component is a part. For example, the enclosing structure can be "flatter" on one or both sides so that a person can move with ease alongside the drivetrain.

As indicated above, the outer surface of the component may act as a boundary of the interior cavity. In such a configuration, annular seals can be arranged between the side faces of the enclosing structure and the component surface in order to contain the filler in the interior cavity.

In a further exemplary embodiment, the damping box may be mounted in the interior of a wind turbine tower. In this case, the enclosing structure is essentially circular, and the outer diameter of the enclosing structure corresponds to the inner diameter of the tower at the mounting height. If all parts are made of steel, the outer annular perimeter of each side element can be welded to the tower. Alternatively, to avoid any alteration to the wall structure, the damper can be secured to the tower wall with a mechanical means such as an expansion joint. The damper can be constructed to have a central opening to accommodate a cable hang-off, a service elevator, etc. The volume of the interior cavity is determined to some extent by the height of the enclosing structure, and also by its the inner diameter. Such a realisation of the inventive damping box can be effective at suppressing tower vibrations. Since the hollow wind turbine tower can act as an amplifier for tonal noise originating in the drivetrain, the inventive damping box can make a significant contribution to keeping such noise below a critical threshold.

In a further preferred embodiment of the invention, a damping box can have the shape of a section of a larger structure, for example a larger annular structure. Two or more such damping boxes can be arranged about a vibrating component, for example the gearbox of a wind turbine drivetrain. The resulting arrangement can be regarded as a "two-part damper".

Since the principle of the inventive damping box is to promote countless collisions between particles of the filler, degradation of the filling material can be expected.

Therefore, in a preferred embodiment of the invention, the damping box is constructed to allow the filling to be removed from the interior cavity and replaced by "fresh" filler. For example, a hatch or lid at an upper region of the damping box can be used to introduce filler into the interior cavity, and a hatch at or near the base of the damping box can be provided to allow degraded filler to be emptied out of the damper as required.

Other objects and features of the present invention will become apparent from the following detailed descriptions considered in conjunction with the accompanying drawings. It is to be understood, however, that the drawings are designed solely for the purposes of illustration and not as a definition of the limits of the invention.
- Figure 1: shows an instance of the inventive damping box deployed in a wind turbine drivetrain;
- Figure 2: shows two instances of the inventive damping box deployed in a wind turbine drivetrain;
- Figure 3: shows instances of the inventive damping box deployed in a wind turbine tower;
- Figures 4 - 7: show perspective views of various possible embodiments of the inventive damping box;
- Figure 8: shows a cross-section through an exemplary embodiment of the inventive damping box:
- Figure 9: shows a further embodiment of the inventive damping box.

In the diagrams, like numbers refer to like objects throughout. Objects in the diagrams are not necessarily drawn to scale.

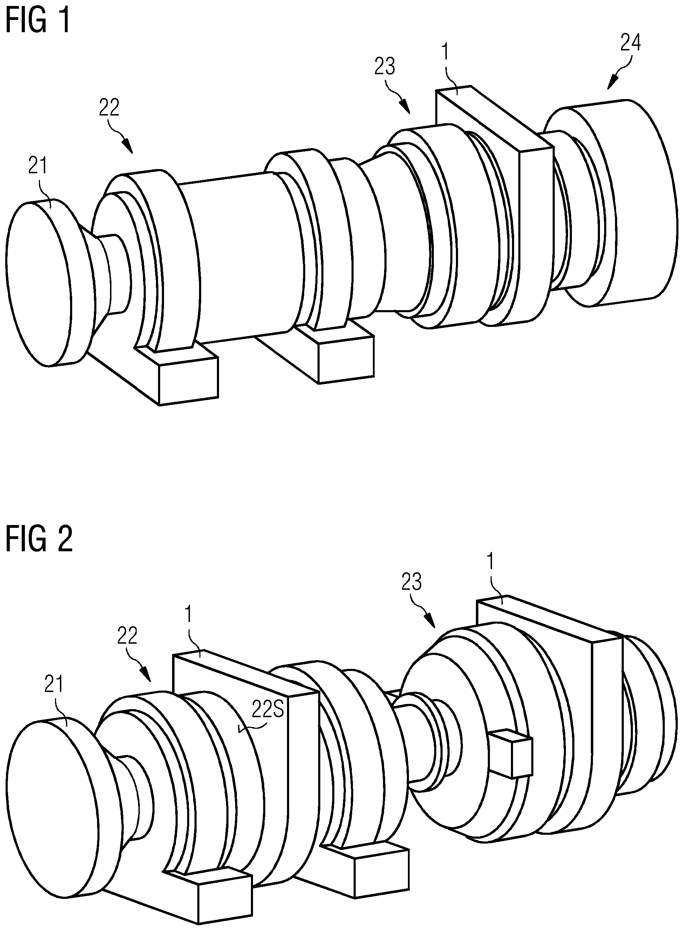

Figure 1 illustrates how an instance of the inventive noise damping box 1 might be deployed in a wind turbine drivetrain. The diagram shows - greatly simplified - various parts of a wind turbine drivetrain, namely a low-speed shaft 21 supported by a main bearing unit 22, a three-stage planetary gearbox 23 and a generator 24. The gearbox/generator assembly can be mounted in cantilever fashion to the main bearing unit 22 in any suitable manner, for example by means of a coupling interface (as indicated here) and/or a number of torque arms extending between housings of the main bearing and gearbox, as will be known to the skilled person. In a cantilever configuration, the weight of the entire drivetrain is transferred to the wind turbine tower through the main bearing unit 22, which is constructed for connection to a nacelle bedplate.

The diagram shows an instance of the inventive noise damping box 1 in place about the second stage of the planetary gearbox 23. During operation of the wind turbine, vibrations arising in this part of the gearbox 23 are absorbed to a significant extent by the noise damping box 1, so that tonal noise from the drivetrain is effectively damped and reduced to a favourably low level.

Figure 2 shows a further configuration, in which two instances of the inventive noise damping box 1 are deployed. One damping box 1, as explained in Figure 1 above, is in place about a stage of the planetary gearbox 23. Another damping box 1 is placed about the main bearing unit 22. During operation of the wind turbine, vibrations arising in the gearbox 23 and the main bearing unit 22 can be absorbed in an effective manner.

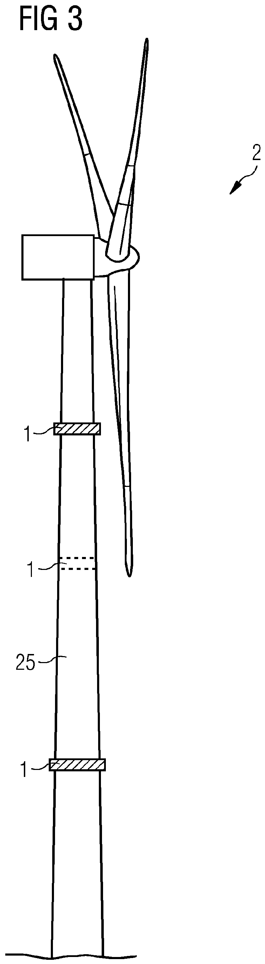

Figure 3 is a simplified drawing of a wind turbine 2, showing other possible locations in which the inventive damping box 1 can be installed to good effect. As indicated, a damping box 1 can be installed inside the wind turbine tower 21 at any appropriate level; equally, a damping box can be installed at the exterior of the wind turbine tower 21. Since the tower is one of the major contributors to overall wind turbine noise on account of its resonant frequency, the option of damping tower vibrations using one or more instances of the inventive damper 1 can be very advantageous.

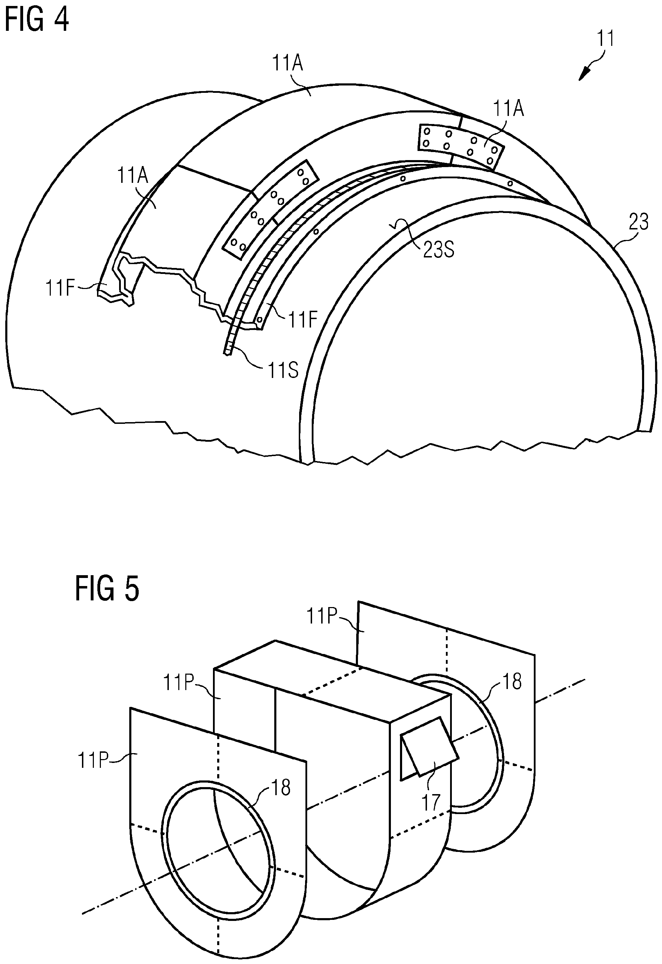

Figures 4 - 7 show perspective views of various possible embodiments of the inventive damping box 1. In Figure 4, the enclosing structure 11 of the damping box 1 is assembled from multiple arcuate parts 11A. Adjacent parts 11A overlap to some extent (indicated by the ghost lines) and are connected using panels attached to the exterior sides. In this exemplary embodiment, the arcuate parts 11A are shaped to form outwardly-extending flanges 11F, and lashing straps 11S are in place over the flanges 11F to press the enclosing structure 11 against the component, for example a wind turbine drivetrain component such as the gearbox 23.

In Figure 5, the enclosing structure 11 of the damping box 1 is assembled from several major parts 11P, arranged in an essentially vertical orientation. Each major part 11P can comprise multiple minor parts (indicated by the ghost lines) that are connected in situ. The assembled parts 11P are shaped to fit about an essentially horizontal drivetrain component such the main bearing unit, a ring gear of a planetary gearbox, etc. This embodiment of the damping box 1 has an outer surface which determines the depth of the interior cavity. The major parts 11P of the enclosing structure 11 can be joined at their outer edges, for example by means of a weld bond or adhesive bond, depending on the material from which they are made. In this embodiment, annular seals 18 are provided about the annular inner edges of the enclosing structure 11. The seals 18 will ensure that filler material is contained in the damping box 1. Here, the enclosing structure 11 has a flattened upper portion with a hatch 17 which can be opened as illustrated to allow the interior cavity 10 to be accessed. For example, the hatch can be in the form of a hinged lid 17 which can be opened to allow filler 15 to be removed or added as required. As explained above, the filler 15 can be a type of sand or similar particulate, with preferably irregularly or randomly shaped particles.

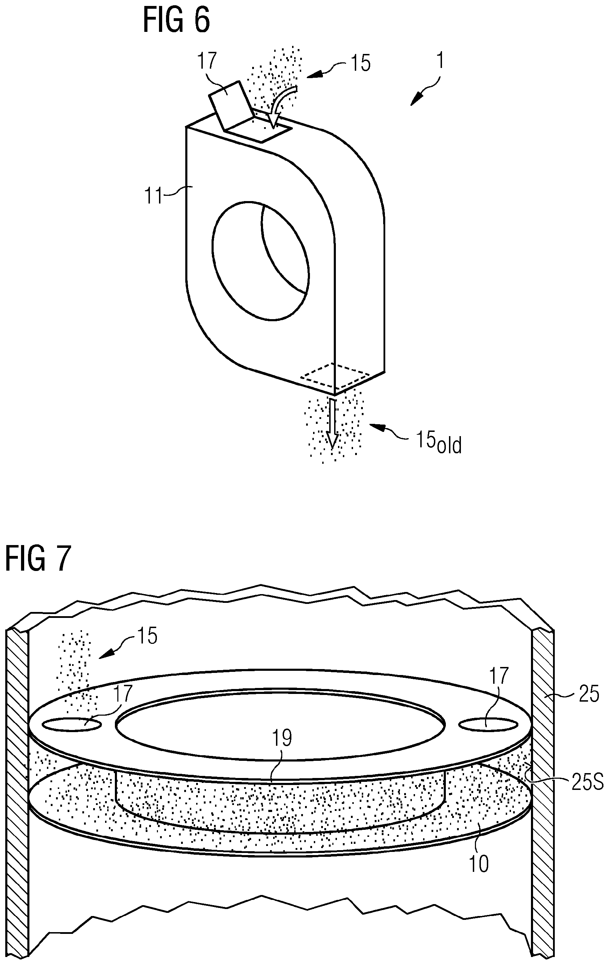

Figure 6 shows an essentially annular embodiment, again dimensioned to fit about an annular wind turbine component or structure. The enclosing structure 11 can be assembled as described in Figure 3 or Figure 4, for example. Here, two openings 17 are provided for adjusting the filler: a lower opening is provided at the base of the damping box 1 so that degraded filler 15_{old} can be removed easily if required; and a further opening 17 is provided at a higher level so that fresh filler 15 can be easily poured into the damping box 1 as necessary.

In Figure 7, the damping box 1 is also essentially annular in design. This embodiment of the damping box 1 is suitable for use with an essentially vertical wind turbine component, for example the wind turbine tower 21 of Figure 3, shown here in a cut-out view. The outer diameter(s) of the enclosing structure 11 match the interior diameter(s) of the tower 21 at that mounting level. An inner opening formed by the annular shape of the enclosing structure 11 can accommodate a cable hang-off, a service elevator, etc. A close fit between the enclosing structure 11 and the tower wall ensures that filler 15 is contained within the damping box 1. Here, a means 17 of adding or removing filler 15 is provided at the upper annular face of the damping box 1 as illustrated.

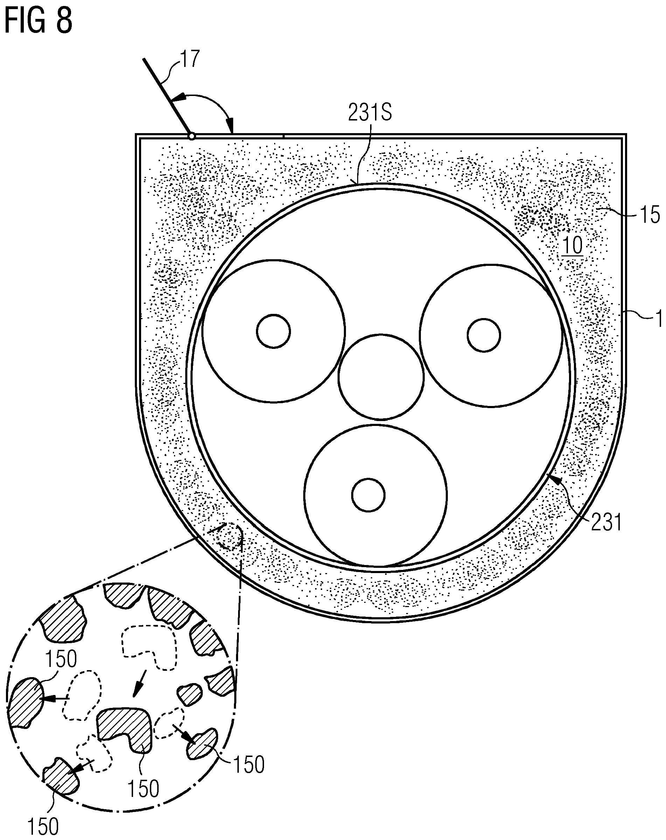

Figure 8 shows a cross-section through the damping box of Figure 4, to illustrate the principle of the invention. The diagram shows the damping box 1 in place about a wind turbine component, in this case the ring gear 231 of a gearbox stage. During operation of the wind turbine, vibrations develop in the gearbox 23, and the ring gear 231 will vibrate accordingly. As a result, kinetic energy is transferred from the ring gear 231 to any filler particles 150 that are in contact with the ring gear surface, causing them to move. The moving filler particles 150 then collide with neighbouring filler particles 150, which in turn bump into further particles, etc. This is indicated in the enlarged part of the diagram. Each "collision" between filler particles 150 involves the conversion of a small quantity of kinetic energy into a correspondingly small quantity of thermal energy. A small quantity of kinetic energy may also be converted into a correspondingly small quantity of sound. The many collisions between filler particles result in dissipation of the kinetic energy of vibration, and effectively dampen the vibration of the wind turbine component. The relatively low thermal energy arising from collisions between filler particles can easily dissipate through the outer faces of the damping box. Sound arising from collisions between filler particles will be a type of "white noise" with a broad spectrum and low amplitude, and will not contribute in any significant way to the overall wind turbine noise.

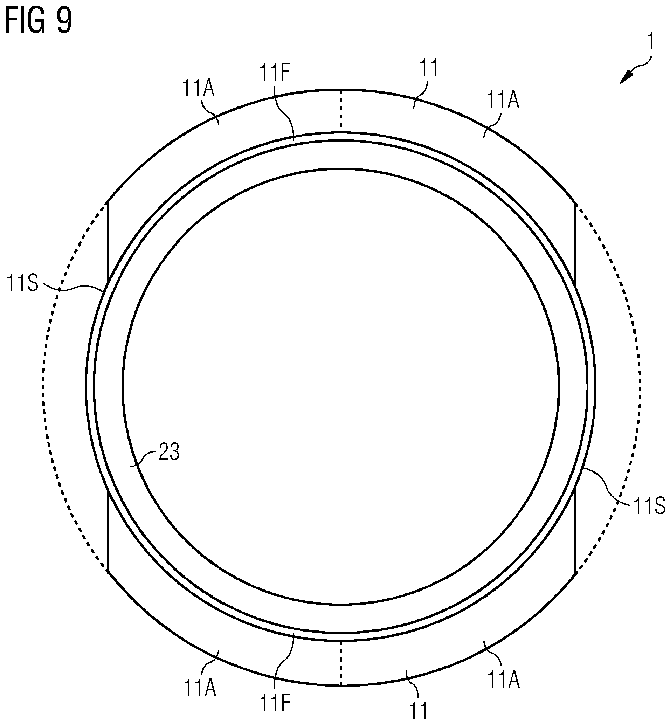

Figure 9 shows a further embodiment of the inventive damping box. In this case, a "two-part damper" comprising two damping boxes 1 is arranged about a vibrating component, for example the gearbox 23 of a wind turbine drivetrain. Each damping box 1 has the shape of a section of a larger annular structure, as indicated by the ghost lines. Such a realisation may be particularly suited to a space-constrained environment such as a nacelle interior. Similar to the embodiment of Figure 4, each enclosing structure 11 is assembled from several arcuate parts 11A. In this exemplary embodiment, the arcuate parts 11A are shaped to form outwardly-extending flanges 11F, and lashing straps 11S are in place over the flanges 11F to press the enclosing structures 11 against the component 23.

Although the present invention has been disclosed in the form of preferred embodiments and variations thereon, it will be understood that numerous additional modifications and variations could be made thereto without departing from the scope of the invention. For example, while the filler described above is particulate in nature, the inventive damping box could equally be realised to contain a fluid filler, a combination of fluid and solid materials, etc. For example, a high-viscosity and high-density fluid may be effective as a filler. Equally, particles of a solid or semisolid material could be suspended in a suitable fluid. For the sake of clarity, it is to be understood that the use of "a" or "an" throughout this application does not exclude a plurality, and "comprising" does not exclude other steps or elements.

## Claims

1. A damper (1) mounted about a component (22, 23, 24, 25), which damper (1) comprises
- an enclosing structure (11) shaped to fit about the component (22, 23, 24, 25);
- an interior cavity (10) defined by the enclosing structure (11) and a surface (231S, 22S, 25S) of the component (22, 23, 24, 25); and
- a quantity of energy-absorbing material (15) in the interior cavity (10) of the damper (1), which energy-absorbing material (15) comprises a particulate matter, preferably a particulate matter with irregular particle shapes.

2. A damper according to the preceding claim, wherein the quantity of energy absorbing material (15) is chosen on the basis of a desired reduction in amplitude of vibration of the component (22, 23, 24, 25).

3. A damper according to any of the preceding claims, wherein the quantity of energy-absorbing material (15) is chosen to alter a resonant frequency of the component (22, 23, 24, 25) by a desired amount.

4. A damper according to any of the preceding claims, wherein the enclosing structure (11) is made of sheet metal.

5. A damper according to any of the preceding claims, wherein the enclosing structure (11) comprises a plurality of parts (11P) assembled about the component (22, 23, 24, 25).

6. A damper according to any of the preceding claims, wherein the enclosing structure comprises a plurality of arcuate parts (11).

7. A damper according to any of the preceding claims, wherein the enclosing structure (11) comprises an essentially U-shaped cross-section, and the interior cavity (10) is formed by the enclosing structure (11) and a surface (231S, 22S, 25S) of the component (22, 23, 24, 25).

8. A damper according to the preceding claim, comprising a seal (18) arranged between the enclosing structure (11) and the surface (231S, 25S) of the component (22, 23, 24, 25).

9. A damper according to any of the preceding claims, wherein a portion of the enclosing structure (11) is shaped according to access requirements.

10. A method of assembling a damper (1) according to any of claims 1 to 9 on a component (22, 23, 24, 25), which method comprises the steps of:
- assembling the enclosing structure (11) about the component (22, 23, 24, 25); and
- filling the assembled enclosing structure (11) with a predetermined quantity of the energy absorbing material (15) .

11. A method according to the preceding claim, wherein the component is a wind turbine drivetrain component (22, 23, 24) .

12. A method according to claim 10 or claim 11, comprising a step of adjusting the damping properties of the damper (1) by adjusting the quantity of the energy absorbing material (15) in the interior cavity of the damper (1).

13. A method according to any of claims 10 to 12, comprising a step of adjusting the damping properties of the damper (1) by adjusting the composition of the energy absorbing material (15) in the interior cavity of the damper (1).

14. A method according to any of claims 10 to 13, comprising a step of adjusting the grain size and/or the hardness and/or the density of the energy absorbing material (15).

15. A wind turbine (2) comprising a drivetrain (20) installed in a nacelle mounted on a tower (25), and comprising at least
- a damper (1) according to any of claims 1 to 9 assembled about a ring gear (231) of a planetary gearbox (23) of the drivetrain; and/or
- a damper (1) according to any of claims 1 to 9 assembled about a main bearing unit (22) of the drivetrain; and/or
- a damper (1) according to any of claims 1 to 9 assembled about a generator (24) of the drivetrain; and/or
- a damper (1) according to any of claims 1 to 9 assembled about the exterior of the tower (25); and/or
- a damper (1) according to any of claims 1 to 9 assembled about the interior of the tower (25).
